# EUROPEAN PATENT APPLICATION

(11) **EP 3 730 407 A1**
(43) Date of publication of application: **28.10.2020**
(21) Application number: 18903289.9
(22) Date of filing: 07.09.2018
(51) Int. Cl.: B64D 27/26, B64C 7/00, B64D 7/04

(54) **AIRCRAFT**

(30) Priority: 31.01.2018 JP 2018015594
(71) Applicant: MITSUBISHI HEAVY INDUSTRIES, LTD., Chiyoda-ku Tokyo 100-8332 (JP)
(72) Inventor: YUMITORI, Takaaki, Tokyo 108-8215 (JP); NOMURA, Takayuki, Tokyo 108-8215 (JP); KODAMA, Satoshi, Tokyo 108-8215 (JP)
(74) Representative: Henkel & Partner mbB
(86) International application number: PCT/JP2018/033326
(87) International publication number: WO 2019/150637

(57) **Abstract**

The present invention comprises: a main wing 11; an engine 15 attached to the main wing 11; and a connecting structure 20 for connecting the main wing 11 and the engine 15. The connecting structure 20 has: an engine pylon 21 that is provided so as to extend in the yaw axis direction of an aircraft 1 from the main wing 11 and connects the main wing 11 and the portion immediately above the engine 15 in a manner capable of supporting the engine 15; and a sub pylon 22 that is provided so as to extend from a position that is beyond the engine pylon 21 and nearer to the leading end of the main wing 11, toward the engine 15 which is located nearer the base end of the main wing 11, and connects the main wing 11 and the engine 15. The main wing 11, the engine pylon 21, and the sub pylon 22 form a truss structure.

## Description

### Technical Field

The present invention relates to an aircraft having a mounted object connected to a main wing.

### Background Art

Generally, an engine as a mounted object is connected to a main wing of an aircraft. The engine is accommodated in a nacelle, and a coupling structure for coupling the nacelle and the main wing together is made by a pylon. In the case of such a coupling structure, flutter is generated due to vibration of the engine and the main wing. Further, as the coupling structure between the main wing and the engine, there is known a structure provided with two support structures for coupling both side surfaces of the engine to the main wing above the engine (refer to, for example, PTL 1). With this support structure, during reverse injection of the engine during landing of the aircraft, the engine is exhausted upward, thereby improving braking efficiency.

### Citation List

### Patent Literature

[PTL 1] US Patent No. 92211955

### Summary of Invention

### Technical Problem

Incidentally, in recent years, there has been a demand for making the engine diameter large, increasing the wing width of the main wing, reducing the wing thickness of the main wing, or the like in order to improve fuel efficiency or reduce noise. If the engine diameter increases, the mass of the engine increases, so that the influence of a twist mode, which is one mode of the vibration of the main wing, increases, and thus the flutter is easily generated. Further, if the wing width of the main wing is increased or the wing thickness of the main wing is reduced, the rigidity of the main wing is reduced, so that the natural frequency of the main wing is reduced, and thus the flutter is easily generated.

Therefore, the present invention has an object to provide an aircraft in which it is possible to improve flutter characteristics while facilitating a design change. Solution to Problem

An aircraft according to the present invention includes: a main wing; a mounted object mounted to the main wing; and a connecting structure for connecting the main wing and the mounted object, in which the connecting structure includes a pylon that is provided to extend in a yaw axis direction of the aircraft from the main wing and connects the main wing and a directly upper portion of the mounted object to support the mounted object, and a support rod that is provided to extend from a position closer to a tip side of the main wing than the pylon toward a mounted object side located on a base end side of the main wing and connects the main wing and the mounted object, and a truss structure is formed by the main wing, the pylon, and the support rod.

According to this configuration, since the truss structure can be formed by the main wing, the pylon, and the support rod, the rigidity of the main wing can be increased. For this reason, the natural frequency of the main wing can be increased, so that the flutter characteristics can be improved. In other words, since the rigidity of the main wing can be increased by the truss structure, it is possible to make the engine large, increase the wing width of the main wing, or reduce the wing thickness of the main wing, and it is possible to achieve improvement in fuel efficiency or a reduction in noise. Further, since the pylon is made to be able to support the mounted object alone, it can be configured to be the same as that of an existing aircraft, and since it is merely necessary to add a support rod to the existing aircraft, a design change can be made easier. As the mounted object, there is an engine, a dropped object, or the like. Further, the mounted object may be provided not only below the main wing but also above the main wing.

Further, it is preferable that the main wing has a box beam that is a structure extending in a wing length direction that is a direction connecting the base end side and the tip side, and the pylon and the support rod are connected to the box beam.

According to this configuration, since the pylon and the support rod can be coupled to the box beam as the structure, the truss structure can be configured with the structure, so that it is possible to appropriately increase the rigidity of the main wing.

Further, it is preferable that the support rod is connected to a leading edge side of the main wing.

According to this configuration, it is possible to increase the rigidity of the main wing with respect to the leading edge side of the main wing where the flutter is easily generated.

Further, it is preferable that in a cross section taken along a plane orthogonal to the extending direction, a length of the support rod in a direction connecting the leading edge side and a trailing edge side is longer than a length in a direction connecting an upper surface side and a lower surface side.

According to this configuration, the support rod can be formed as a plate-shaped support rod whose width direction is the direction connecting the leading edge side and the trailing edge side, and whose thickness direction is the direction connecting the upper surface side and the lower surface side. Since this support rod can increase a natural frequency in a twist mode which is one of the vibration modes of the main wing, the coupling with a bending mode which is another one of the vibration modes of the main wing is less likely to occur, and thus the flutter characteristics can be improved.

Further, it is preferable that the support rod has an airfoil shape in the cross section taken along the plane orthogonal to the extending direction.

According to this configuration, a decrease in aerodynamic characteristics can be suppressed by reducing airflow resistance to the support rod.

Further, it is preferable that the aircraft further includes a reinforcement member provided in the mounted object as a structure which is provided between the pylon and the support rod.

According to this configuration, even in a case where the rigidity of the portion between the pylon and the support rod which are connected to the engine is low, the rigidity can be increased by the reinforcement member, so that it is possible to make the truss structure stronger.

### Brief Description of Drawings

Fig. 1 is an explanatory diagram schematically showing a part of an aircraft according to the present embodiment.
Fig. 2 is a sectional view of a box beam of a main wing.
Fig. 3 is a sectional view of a sub pylon.
Fig. 4 is an explanatory diagram showing flutter characteristics of a main wing of an aircraft according to the related art.
Fig. 5 is an explanatory diagram showing flutter characteristics of a main wing of the aircraft according to the present embodiment.
Fig. 6 is an explanatory diagram showing flutter characteristics of the main wing of the aircraft according to the present embodiment.

### Description of Embodiments

Hereinafter, an embodiment according to the present invention will be described in detail with reference to the drawings. The present invention is not limited by the embodiment. Further, the components in the following embodiment include those that can be easily replaced by those skilled in the art, or those that are substantially the same. Further, the components described below can be appropriately combined, and in a case where there are a plurality of embodiments, the respective embodiments can be combined.

### [Present Embodiment]

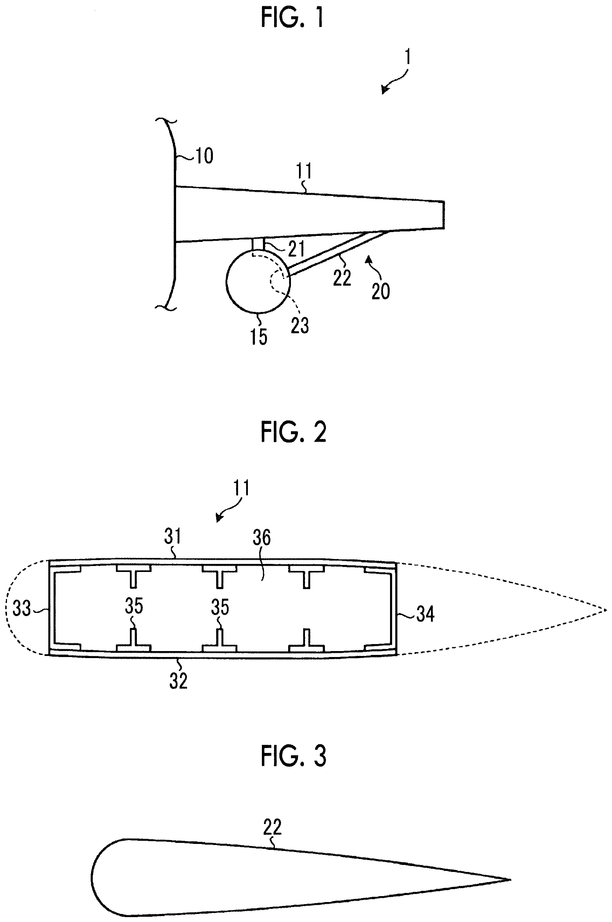

Fig. 1 is an explanatory diagram schematically showing a part of an aircraft according to this embodiment. Fig. 2 is a sectional view of a box beam of a main wing. Fig. 3 is a sectional view of a sub pylon.

An aircraft 1 according to this embodiment has an engine 15 connected as a mounted object to a lower surface of a main wing 11. In this embodiment, the present invention will be described to be applied to the engine 15 as the mounted object. However, there is no particular limitation to the engine 15, and for example, the mounted object may be a dropped object that is dropped toward a target, or the like.

As shown in Fig. 1, the aircraft 1 includes a fuselage 10, the main wing 11, the engine 15, and a connecting structure 20. The fuselage 10 is a tubular portion provided to extend in a roll axis direction (a direction perpendicular to the plane of the paper of Fig. 1) which is a direction connecting the nose side and the tail side of the aircraft 1. The main wing 11 is provided in the vicinity the central portion of the fuselage 10 and is a wing body extending from the fuselage 10 to the outer side in a pitch axis direction (a right-left direction in Fig. 1) orthogonal to the roll axis direction.

As shown in Fig. 2, the main wing 11 has a box beam as a main structure, and includes an upper skin 31, a lower skin 32, a front spar 33, a rear spar 34, a plurality of stringers 35, and a plurality of ribs 36.

The upper skin 31 is an upper skin of the main wing 11. The lower skin 32 is a lower skin of the main wing 11 and is disposed to face the upper skin 31. The front spar 33 is a beam which is provided between the upper skin 31 and the lower skin 32, disposed along a wing length direction that is a direction connecting the base end side and the tip side of the main wing 11, and disposed on the front side of the main wing 11. The rear spar 34 is a beam which is provided between the upper skin 31 and the lower skin 32 disposed along the wing length direction of the main wing 11, and disposed on the rear side of main wing 11. The plurality of stringers 35 are longitudinal materials which are each formed in a T-shaped cross section in this embodiment, are provided on the inner sides of the upper skin 31 and the lower skin 32, respectively, and are disposed along the wing length direction of the main wing 11. In this embodiment, the stringer 35 having a T-shaped cross section has been exemplified. However, the cross-sectional shape of the stringer 35 is not particularly limited, and for example, a Z shape, a J shape, an I shape, a Y shape, or a hat shape may be adopted. The plurality of ribs 36 are aggregates which are disposed predetermined intervals in the wing length direction of the main wing 11. Then, the connecting structure 20 (described later) is connected to the box beam of the main wing 11.

Referring again to Fig. 1, the engine 15 is, for example, a gas turbine engine and generates a propulsive force by compressing air taken in from the front side of the aircraft 1, mixing the compressed air with fuel, burns the mixture, and discharging the combustion gas after combustion to the rear side of the aircraft. The engine 15 is provided on the lower side of the main wing 11. Further, the engine body of the engine 15 is accommodated in a nacelle, and the connecting structure 20 (described later) is connected to the nacelle of the engine 15.

The connecting structure 20 connects the main wing 11 and the engine 15 and increases the rigidity of the main wing 11 by a truss structure. The connecting structure 20 includes an engine pylon (a pylon) 21, a sub pylon (a support rod) 22, and a reinforcement member 23.

The engine pylon 21 is a support that can support the engine 15 on the main wing 11. One end of the engine pylon 21 is connected to the box beam of the central portion of the main wing 11, and the other end of the engine pylon 21 is connected to a directly upper portion of the nacelle of the engine 15. The engine pylon 21 is provided along a yaw axis direction of the aircraft 1. That is, the engine pylon 21 is provided to extend from the lower surface of the central portion of the main wing 11 toward the lower side in the yaw axis direction, and is connected to the directly upper portion of the engine 15.

The sub pylon 22 is one of members configuring a truss structure together with the main wing 11 and the engine pylon 21. One end of the sub pylon 22 is connected to the box beam of the tip portion of the main wing 11, and the other end of the sub pylon 22 is connected to an outer side portion of the nacelle of the engine 15. Further, one end of the sub pylon 22 which is connected to the main wing 11 is connected to the leading edge side of the main wing 11. The sub pylon 22 is provided to be inclined with respect to the yaw axis direction of the aircraft 1. That is, the sub pylon 22 is provided to extend from the position closer to the tip side of the main wing 11 than the engine pylon 21 toward the engine 15 side located on the base end side of the main wing 11, so that the sub pylon 22 is provided to be inclined with respect to the engine pylon 21 and is connected to the side portion of the engine 15.

Fig. 3 shows a cross-sectional shape of the sub pylon 22, in which the left side of the plane of the paper in Fig. 3 is the front side of the aircraft 1 and the right side is the rear side of the aircraft 1, and the upper side of the plane of the paper in Fig. 3 is the upper side of the aircraft 1 and the lower side is the lower side of the aircraft 1. The sub pylon 22 is made such that in a cross section taken along a plane orthogonal to the extending direction, the length thereof in the direction connecting the front side and the rear side of the aircraft 1 is longer than the length thereof in the direction connecting the upper surface side and the lower surface side. That is, the sub pylon 22 is a plate-shaped member, in which the extending direction is defined as a length direction thereof, the direction connecting the front side and the rear side is defined as a width direction thereof, and the direction connecting the upper surface side and the lower surface side is defined as a thickness direction thereof. The sub pylon 22 is provided such that the upper surface thereof and the lower surface of the main wing 11 face each other, and is provided such that the interval between the sub pylon 22 and the main wing 11 is reduced toward the tip side. Further, the sub pylon 22 has an airfoil shape in the cross section shown in Fig. 3 and has a shape with small resistance to an airflow flowing from the front side to the rear side of the aircraft 1.

The sub pylon 22 is formed using, for example, a composite material or a highly rigid material. In a case where the composite material is applied, the rigidity of the sub pylon 22 may be adjusted by adjusting the anisotropy of the reinforcing fibers contained in the composite material. Further, in a case where the highly rigid material is applied, the rigidity of the sub pylon 22 can be increased, so that the rigidity of the truss structure can be increased.

The reinforcement member 23 is provided in the engine 15 and is a structure provided between the engine pylon 21 and the sub pylon 22. The reinforcement member 23 is provided along the outer periphery of the engine 15 from the directly upper portion of the engine 15 to the outer side portion. The reinforcement member 23 is one of the members configuring the truss structure.

The connecting structure 20 forms a truss structure by the box beam of the main wing 11, the engine pylon 21, and the sub pylon 22, and the connection of the engine pylon 21 and the sub pylon 22 to the engine 15 is reinforced by the reinforcement member 23.

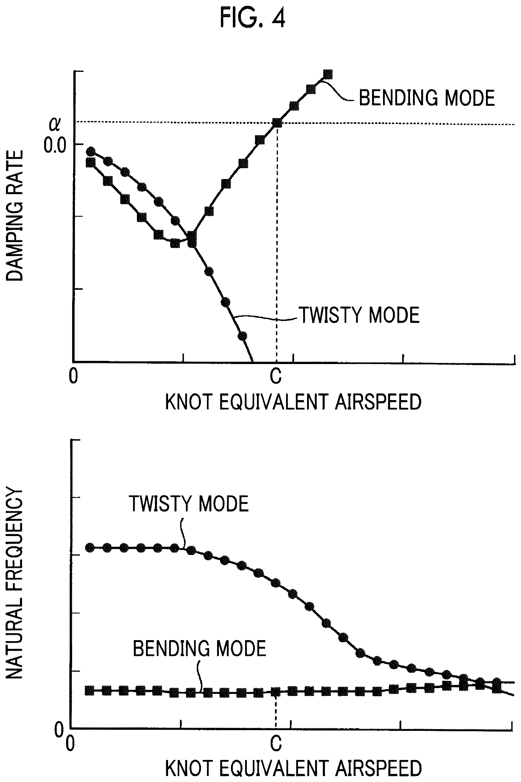

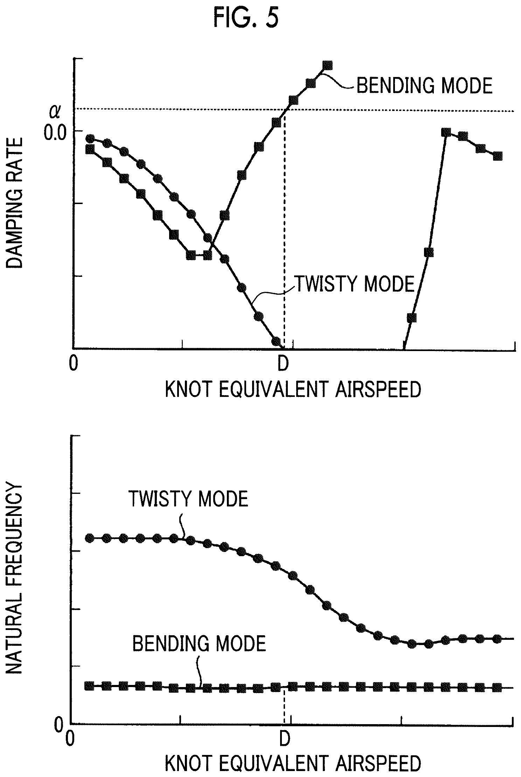

Here, during the flight of the aircraft 1, there is a case where self-excited vibration, so-called flutter, is generated in the main wing 11 as the flight speed of the aircraft 1 increases. The flutter is generated by the coupling between vibration in a twist mode which is generated in the main wing 11 and vibration in a bending mode. The flutter characteristics of the main wing 11 according to this embodiment will be described with reference to Figs. 4 and 5.

Fig. 4 is an explanatory diagram showing the flutter characteristics of a main wing of an aircraft according to the related art, and Fig. 5 is an explanatory diagram showing the flutter characteristics of the main wing of the aircraft according to this embodiment. Fig. 4 is the configuration of the aircraft of the related art and shows the flutter characteristics which are obtained in the aircraft 1 in which the sub pylon 22 is omitted. On the other hand, Fig. 5 is the configuration of the aircraft 1 of this embodiment and shows the flutter characteristics which are obtained in the aircraft 1 having the sub pylon 22.

The upper diagram of Fig. 4 is an explanatory diagram showing the relationship between an airspeed and a vibration damping rate in the twist mode and a vibration damping rate in the bending mode in the main wing of the related art, and the lower diagram of Fig. 4 is an explanatory diagram showing the relationship between the airspeed and a natural frequency in the twist mode and a natural frequency in the bending mode in the main wing of the related art. Further, the upper diagram of Fig. 5 is an explanatory diagram showing the relationship between an airspeed and a vibration damping rate in the twist mode and a vibration damping rate in the bending mode in the main wing 11 of this embodiment, and the lower diagram of Fig. 5 is an explanatory diagram showing the relationship between the airspeed and a natural frequency in the twist mode and a natural frequency in the bending mode in the main wing 11 of this embodiment. In Figs. 4 and 5, a knot equivalent airspeed (KEAS) is applied as the airspeed. Since the airspeed does not need to be a knot, it is not limited to the knot equivalent airspeed, but may be a relative speed between the aircraft and the air. Therefore, the airspeed may be simply an equivalent airspeed. In Figs. 4 and 5, the damping rate is a damping rate of vibration and is a value obtained by taking a natural logarithm of a ratio of the amplitudes adjacent to each other in a vibration waveform. Considering the effect of structural damping by the wing itself, the damping rate is assumed to be a value at which the flutter has occurred in the wing at the point in time when reaching a threshold value α which is slightly larger than 0. In the upper diagrams of Figs. 4 and 5, the horizontal axis represents the knot equivalent airspeed, and the vertical axis represents the damping rate. Further, in the lower diagrams of Figs. 4 and 5, the horizontal axis represents the knot equivalent airspeed, and the vertical axis represents the natural frequency.

In the lower diagram of Fig. 4, when the airspeed increases, the natural frequency in the twist mode decreases, while the natural frequency in the bending mode becomes the frequency which is almost the same as the natural frequency in a case where the airspeed is zero, and becomes almost constant. In the lower diagram of Fig. 5, although the natural frequency in the bending mode is almost the same as that of Fig. 4, the natural frequency in the twist mode becomes higher than that of Fig. 4 in a region where the airspeed is high. Further, as shown in the upper diagrams of Figs. 4 and 5, in the main wing of the related art, when the airspeed reaches a value C, the damping rate exceeds the threshold value α, whereas in the main wing 11 according to this embodiment, when the airspeed reaches a value D larger than the value C, the damping rate exceeds the threshold value α. In this manner, it is confirmed that in the main wing 11 according to this embodiment, the airspeed, that is, the value of a flutter speed, at which the damping rate exceeds the threshold value α, is larger than that in the main wing of the related art, and thus it is possible to suppress the occurrence of the flutter.

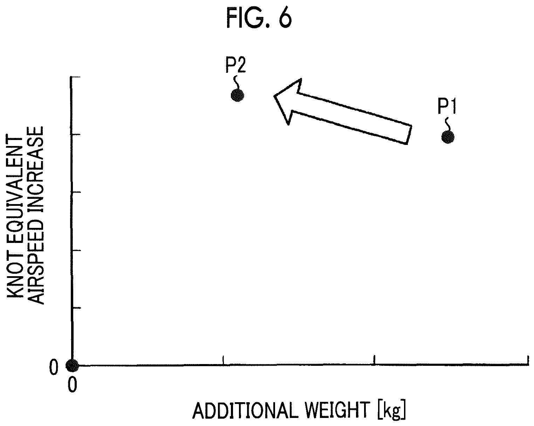

Next, the flutter characteristics of the main wing 11 of the aircraft 1 according to this embodiment will be described with reference to Fig. 6. Fig. 6 is an explanatory diagram showing the flutter characteristics of the main wing of the aircraft according to this embodiment. In Fig. 6, the horizontal axis represents an additional weight, and the vertical axis represents a knot equivalent airspeed increase. A point P1 is the aircraft 1 of the related art, that is, the aircraft 1 in which the sub pylon 22 is omitted, and is a point indicating the flutter characteristics and the additional weight when the plate thickness of each of the skins 31 and 32 of the main wing is increased by 20% compared to that in the related art, in order to improve the flutter characteristics. A point P2 is a point indicating the flutter characteristics and the additional weight in the aircraft 1 of this embodiment.

The point P1 of the related art has a larger additional weight and a smaller increase in the knot equivalent airspeed than the point P2 of this embodiment. In other words, the point P2 of this embodiment has a smaller additional weight and a larger increase in the knot equivalent airspeed than the point P1 of the related art. That is, the aircraft 1 of this embodiment can reduce the additional weight and improve the flutter characteristics merely by installing the sub pylon 22, as compared with increasing the plate thicknesses of the skins 31 and 32 of the main wing 11.

As described above, according to Embodiment 1, since the truss structure can be formed by the main wing 11, the engine pylon 21, and the sub pylon 22, the rigidity of the main wing 11 can be increased. For this reason, the natural frequency of the main wing 11 can be increased, so that the flutter characteristics can be improved. In other words, since the rigidity of the main wing 11 can be increased by the truss structure, it is possible to make the engine 15 large, increase the wing width of the main wing 11, or reduce the wing thickness of the main wing 11, and it is possible to achieve improvement in fuel efficiency or a reduction in noise. Further, since the engine pylon is made to be able to support the engine 15 alone, it can be configured to be the same as that of an existing aircraft, and since it is merely necessary to add the sub pylon 22 to the existing aircraft, a design change can be made easier.

Further, according to Embodiment 1, since the engine pylon 21 and the sub pylon 22 can be coupled to the box beam of the main wing 11 as a structure, the truss structure can be configured with the structure, so that it is possible to appropriately increase the rigidity of the main wing 11.

Further, according to Embodiment 1, by connecting the sub pylon 22 to the leading edge side of the main wing 11, it is possible to increase the rigidity of the main wing in the leading edge side of the main wing 11 where the flutter is easily generated.

Further, according to Embodiment 1, the sub pylon 22 can be formed as a plate-shaped member facing the main wing 11. Since the sub pylon 22 having such a shape can increase the natural frequency in the twist mode, it becomes difficult for vibration to be coupled with the bending mode, so that the flutter characteristics can be improved.

Further, according to Embodiment 1, by making the cross-sectional shape of the sub pylon 22 an airfoil shape, it is possible to reduce airflow resistance and suppress a decrease in aerodynamic characteristics.

Further, according to Embodiment 1, even in a case where the rigidity of the portion between the engine pylon 21 and the sub pylon 22 which are connected to the engine 15 is low, the rigidity can be increased by the reinforcement member 23, so that it is possible to make the truss structure stronger.

In this embodiment, the engine 15 is disposed on the lower side of the main wing 11. However, it may be disposed on the upper side. In this case, the connecting structure 20 has a configuration in which it is turned upside down with the main wing 11 therebetween.

Further, in this embodiment, detachable adapter mechanisms may be provided at the coupling portion between the sub pylon 22 and the main wing 11 and the coupling portion between the sub pylon 22 and the engine 15 to facilitate removal of the sub pylon 22, and thus.to increase maintainability.

### Reference Signs List

- 1:: aircraft
- 10:: fuselage
- 11:: main wing
- 15:: engine
- 20:: connecting structure
- 21:: engine pylon
- 22:: sub pylon
- 23:: reinforcement member
- 31:: upper skin
- 32:: lower skin
- 33:: front spar
- 34:: rear spar
- 35:: stringer
- 36:: rib

## Claims

1. An aircraft comprising:
a main wing;
a mounted object mounted to the main wing; and
a connecting structure for connecting the main wing and the mounted object,
wherein the connecting structure includes
a pylon that is provided to extend in a yaw axis direction of the aircraft from the main wing and connects the main wing and a directly upper portion of the mounted object to support the mounted object, and
a support rod that is provided to extend from a position closer to a tip side of the main wing than the pylon toward a mounted object side located on a base end side of the main wing and connects the main wing and the mounted object, and
a truss structure is formed by the main wing, the pylon, and the support rod.

2. The aircraft according to claim 1, wherein the main wing has a box beam that is a structure extending in a wing length direction that is a direction connecting the base end side and the tip side, and
the pylon and the support rod are connected to the box beam.

3. The aircraft according to claim 1 or 2, wherein the support rod is connected to a leading edge side of the main wing.

4. The aircraft according to any one of claims 1 to 3, wherein in a cross section taken along a plane orthogonal to the extending direction, a length of the support rod in a direction connecting a leading edge side and a trailing edge side is longer than a length in a direction connecting an upper surface side and a lower surface side.

5. The aircraft according to claim 4, wherein the support rod has an airfoil shape in the cross section taken along the plane orthogonal to the extending direction.

6. The aircraft according to any one of claims 1 to 5, further comprising:
a reinforcement member provided in the mounted object as a structure which is provided between the pylon and the support rod.
